# EUROPÄISCHE PATENTSCHRIFT

(11) **EP 1 629 682 B1**
(45) Veröffentlichungstag und Bekanntmachung des Hinweises auf die Patenterteilung: **07.03.2007**
(21) Anmeldenummer: 04724613.7
(22) Anmeldetag: 31.03.2004
(51) Int. Cl.: H04Q 7/34, H04L 12/24

(54) **VERFAHREN ZUR BEHANDLUNG VON PARAMETERAENDERUNGEN IN EINEM MANAGEMENTNETZ EINES ZELLULAREN KOMMUNIKATIONSSYSTEMS UND KOMMUNIKATIONSSYSTEM**
METHOD FOR HANDLING PARAMETER CHANGES IN A MANAGEMENT NETWORK OF A CELLULAR COMMUNICATION SYSTEM, AND COMMUNICATION SYSTEM
PROCEDE POUR TRAITER DES MODIFICATIONS PARAMETRIQUES DANS UN RESEAU DE GESTION D'UN SYSTEME DE COMMUNICATION CELLULAIRE ET SYSTEME DE COMMUNICATION

(30) Priorität: 31.05.2003 DE 10324741; 14.08.2003 DE 10337450
(43) Veröffentlichungstag der Anmeldung: 01.03.2006
(73) Patentinhaber: SIEMENS AKTIENGESELLSCHAFT, 80333 München (DE)
(72) Erfinder: HIRSCH, Lucian, 81373 München (DE)
(86) Internationale Anmeldenummer: PCT/EP2004/050395
(87) Internationale Veröffentlichungsnummer: WO 2004/107790

(56) Entgegenhaltungen:
- EP-A- 0 348 331
- DE-A- 19 801 785
- DE-A- 19 947 083

## Beschreibung

Verfahren zur Behandlung von Parameteränderungen in einem Managementnetz eines zellularen Kommunikationssystems und Kommunikationssystem

Die Erfindung betrifft ein Verfahren und ein Kommunikationssystems zur Behandlung von Parameteränderungen in einem Managementnetz zur Netzüberwachung und -kontrolle eines zellularen Kommunikationssystems nach dem Oberbegriff des Anspruchs 1.

Die Erfindung betrifft ferner ein Kommunikationssystem mit einem Managementnetz zur Netzüberwachung und -kontrolle des zellularen Kommunikationssystems nach dem Oberbegriff des Anspruchs 9.

Die Prinzipien eines Managementnetzes, die auch als TMN-Prinzipien (TMN: Telecommunications Management Network) bezeichnet werden, definieren mehrere Managementschichten für das Management eines Kommunikationssystems - beispielsweise eines Mobil-Kommunikationssystems -, wobei jede Schicht mit Ausnahme der obersten und untersten Schicht eine doppelte Funktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine Agenten-Funktion für die nächsthöhere Schicht zu.

Die ITU-T Standards der Serie X.73x definieren für das Management von Telekommunikations-Netzen verschiedene "Systems Management Functions", die von Applikationsprozessen in einer zentralisierten oder dezentralisierten Management-Umgebung benutzt werden können.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll (z.B. CMIP (Common Management Information Protocol nach ITU-T X.711) oder CORBA (Common Object Request Broker Architecture)) und ein Objektmodell gekennzeichnet werden können.

Solche Schnittstellen gibt es beispielsweise zwischen einerseits der Netzeinrichtungsmanagementebene (Network Element Management Level) und andererseits der Netzeinrichtungsebene (Network Element Level). Ein Beispiel für Netzeinrichtungen zu dieser Schnittstelle (OMC-BSS-Schnittstelle) stellen etwa die Betriebs- und Wartungszentren (OMC Operation and Maintenance Center) auf Seite der Netzeinrichtungsmanagementebene (Network Element Management Level) und die Basisstationen beispielsweise des Basisstationssystem (BSS Base Station System) in einem GSM Mobilfunk-Netz auf der Seite der Netzeinrichtungsebene (Network Element Level) dar. Die Basisstationen eines GSM Netzes der zweiten Generation sind hier beispielsweise genannt. Im Rahmen der vorliegenden Erfindung können auch Basisstationen anderer Kommunikationsnetze, beispielsweise Node B eines UMTS Mobilfunknetzes (UMTS Universal Mobile Telecommunication System) betroffen sein.

Die erwähnten Schnittstellen existieren aber beispielweise auch zwischen einerseits der Netzmanagementebene (Network Management Level) und andererseits der Netzeinrichtungsmanagementebene (Network Element Management Level). Ein Beispiel für Netzeinrichtungen zu dieser Schnittstelle (NMC-OMC-Schnittstelle) stellen etwa die Netzwerkmanagementzentren (NMC Network Management Center) auf der Seite der Netzmanagementebene (Network Management Level) und die Betriebs- und Wartungszentren (OMC Operation and Maintenance Center) auf der Seite der Netzeinrichtungsmanagementebene (Network Element Management Level) z.B. im genannten GSM oder einem anderen Mobilfunk-Netz dar.

Das Konfigurationsmanagement (CM *Configuration Management)* betrifft eine von fünf sogenannten Managementfunktionsbereichen ("Management Functional Areas"), welche die TMN-Prinzipien eines Managementnetzes identifizieren. Das Konfigurationsmanagement definiert eine Reihe von Diensten (servi*ces),* die eine Änderung der Struktur und damit des Verhaltens eines Telekommunikations-Netzes durch den Operator ermöglichen. Diese Dienste beziehen sich immer auf Instanzen von gemanagten Objekten *(Managed Objects),* die in einer objekt-orientierten Umgebung Netzressourcen modellieren und insgesamt die netzspezifische Managementinformationsbasis (MIB Management Information Base) bilden.

Die zelullare Struktur ist ein Grundprinzip für die Konfiguration des Radio-Subsystems eines Mobilfunk-Netzes. Voraussetzung für die Funktionalität eines Mobilfunk-Netzes ist die korrekte Definition von Beziehungen zwischen benachbarten Zellen, auch angrenzende Zellen (*"adjacent cells")* genannt.

Aus "Management Information"-Sicht werden solche Beziehungen mit Hilfe von zwei Objektkategorien grundsätzlich definiert:
- *Cell:* eine Instanz dieser gemanagten Objektklassen (MOC *Managed Object Class)* definiert eine (Referenz-)Zelle in einem Mobilfunk-Netz.
- *AdjacentCell:* eine Instanz dieser gemanagten Objektklassen (MOC) definiert eine Nachbarzelle, die bezogen auf die *Referenz-Zelle* für Handover- und/oder Reselection-Zwecke benutzt werden kann.

Für das Management der "Mobilität" werden die Nachbarschaftsbeziehungen und die damit zusammenhängenden Parameter (wie z.B. *bCCHFrequency, synchronized, hoMargin, rxLevMinCell)* überregional und netzweit, mit Hilfe eines Netzplanungs- Systems (Network Planning System, NPS) festgelegt, das die Korrektheit und die Konsistenz der zellularen Struktur sicherstellt.

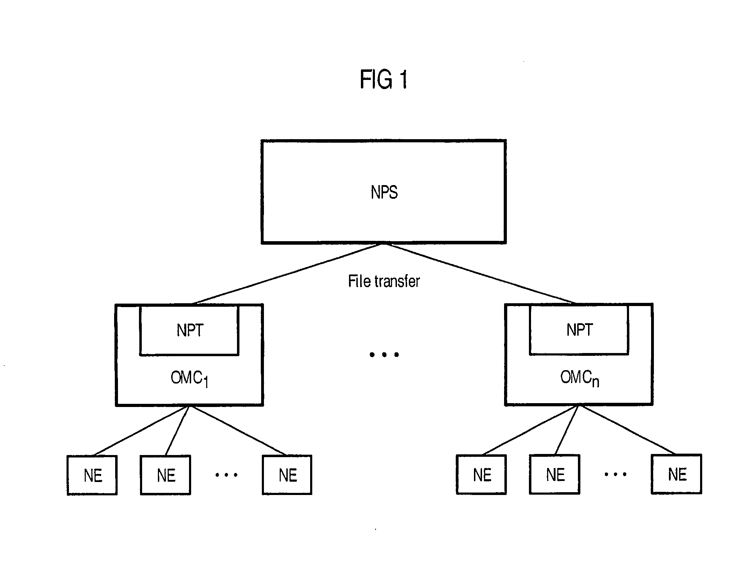

Das Einbringen der Erstkonfiguration und auch große Konfigurationsänderungen erfolgen mit Hilfe dieses Netzplanungs- Systems über eine Datei-Schnittstelle zu einem OMC-spezifischen Netzplanungs-Tool (siehe unten Figur 1). Das Netzplanungs-Tool führt eine Anpassung der vom Netzplanungs-System gelieferten neuen Konfigurationsdaten gemäß den hersteller-spezifischen Parametern durch. Das jeweilige Betriebs- und Wartungszentrum (OMC) ist für die Konfigurierung aller Netzwerkelemente (NE) in seiner Netzregion zuständig.

Der Einsatz des beschriebenen Netzplanungs-Systems mit Netzplanungs-Tool garantiert jederzeit eine korrekte Netzkonfiguration, hat aber den großen Nachteil, dass er aufwendig und für einfache Änderungen von einzelnen Konfigurationsparametern in der Regel unbrauchbar ist. In der alltäglichen Netzmanagement-Praxis gibt es immer wieder Situationen, in denen die Netzstruktur und/oder -parameter (darunter auch die Nachbarschaftsbeziehungen zwischen Zellen) von einem Operator kurzfristig geändert werden sollen:
- Vor Ort mit einem lokalen Wartungsgerät (LMT *Local Maintenance Terminal),* das an verschiedenen Netzeinrichtungen (z.B. eine Netzkontrolleinrichtung (BSC Base Station Controller oder RNC Radio Network Controller)) angeschlossen werden kann (Änderungen von Parametern mit lokaler, Netzelement (NE)-weiter Bedeutung)
- Am *OMC,* auf dem "Network Element Management Layer" (Änderungen von Parametern mit regionaler, OMC-weiter Bedeutung). Wie oben dargelegt, umfasst aus Management-Sicht ein OMC 2 logische Teile: den NE-Manager (für die OMC-NE-Schnittstelle) und den NMC-Agent (für die OMC-NMC-Schnittstelle).

Solche manuell durchzuführende Konfigurationsänderungen sind kritische Operationen, da *"Handover"-* und/oder *"Reselection"-*Prozeduren beeinflusst werden. Da Änderungen der Radioparameter nur in einem überregionalen, netzweiten Kontext korrekt überprüft werden können, haben insofern fehlerhafte bzw. ungenügende Operatoreingaben unter Umständen gravierende negative Konsequenzen für das Verhalten des gesamten Mobilfunk-Netzes.

Das Dokument DE 199 47 083 A1 beschreibt ein Telekommunikationsnetz mit mehreren Netzregionen, bei welchem von einem NMC eine Kommando-Datei in einer Netzregionen-unabhängigen Syntax an ein OMC übermittelt wird, woraufhin das OMC die Kommando-Datei in eine Netzregionen-spezifische Skriptdatei konvertiert und diese an Netzelemente übermittelt.

Das Dokument EP 0 348 331 A2 beschreibt ein Kommunikationsnetzwerk, bei welchem jeder Knoten eine Liste seiner Netzwerkressourcen in einer Topologie-Datenbank aufweist. Ändert sich der Zustand einer solchen Netzwerkressource, versendet der Knoten die überarbeitete Topologie-Datenbank an seine benachbarten Knoten.

Das Managementnetz zur Netzüberwachung und -kontrolle eines zellularen Kommunikationssystems umfasst zumindest zwei Manager und zumindest zwei Agenten als Einrichtungen in verschiedenen Managementebenen, wobei zumindest eine erste Manager-Agent-Beziehung zwischen einem ersten Manager einer Netzeinrichtungsmanagementebene und zumindest einem ersten Agenten einer Netzeinrichtungsebene besteht und wobei zumindest eine zweite Manager-Agent-Beziehung zwischen einem zweiten Manager einer Netzmanagementebene und zumindest einem zweiten Agenten der Netzeinrichtungsmanagementebene besteht. Betrachtet wird hier der Fall, dass ein Parameter bezüglich des zumindest einen ersten Agenten der Netzeinrichtungsebene geändert wird.

Solange die vom lokalen Operator manuell ausgeführten Konfigurationsänderungen eine Zelle betreffen, deren Nachbarzellen (*adjacent cells*) sich innerhalb derselben (vom gleichen OMC überwachten) Netzregion befinden, sind Parameteränderungen üblicherweise in allen benachbarten Zellen über das Betriebs- und Wartungszentrum (OMC) in der Regel sofort bekannt.

Ein Problem stellen aber Parameteränderungen in solchen Zellen dar, die sich am Rande einer Netzregion befinden. Da diese Zellen gleichzeitig Nachbarzellen für Referenz-Zellen aus anderen Netzregionen sind, was bedeutet, dass sie von einem oder mehreren anderen Betriebs- und Wartungszentren (OMC) überwacht werden, müssen diese Änderungen auch in den benachbarten Netzregionen ohne Zeitverzögerung wirksam werden, um eine Datenkonsistenz im gesamten Netz sicherstellen zu können. Anderfalls besteht die große Gefahr, dass *"Handover"-* und "*Cell reselection"*-Mechanismen nicht mehr richtig ablaufen und Gespräche von Mobilfunkteilnehmern verloren gehen.

In aktuellen Systemen verwaltet jeder OMC-Operator eine Tabelle sogenannter *"foreign cells"* (Nachbarzellen aus anderen Regionen), die für *"Handover"* und "Reselection"-Prozeduren relevant sind. Eine Parameteränderung einer *"foreign cell"* z.B. in einer Region muss den anderen Operatoren in angrenzenden Regionen mitgeteilt werden, die dann den entsprechenden Parameter manuell ändern. Bei Kommunikationsproblemen oder fehlerhaften Eingaben entstehen dabei leicht Inkonsistenzen zwischen benachbarten Netzregionen.

Der Erfindung liegt daher die Aufgabe zugrunde, ein Verfahren und ein Kommunikationssystem der eingangs genannten Art aufzuzeigen, durch welche die angegebenen Nachteile vermieden werden können und insbesondere eine verbesserte Möglichkeit des Umgangs mit Parameteränderungen zur Verfügung gestellt werden kann.

Diese Aufgabe wird gemäß der Erfindung hinsichtlich des Verfahrens durch die Merkmale des Patentanspruchs 1 und hinsichtlich des Kommunikationssystems durch die Merkmale des Patentanspruchs 9 gelöst. Vorteilhafte Weiterbildungen und Ausgestaltungen der Erfindung sind den abhängigen Ansprüchen zu entnehmen.

Erfindungsgemäß wird Parameterinformation über die Parameteränderung bezüglich des zumindest einen ersten Agenten der Netzeinrichtungsebene vom zugehörigen zweiten Agenten der Netzeinrichtungsmanagementebene über den zumindest einen zweiten Manager der Netzmanagementebene an zumindest einen weiteren zweiten Agenten der Netzeinrichtungsmanagementebene übermittelt.

Dies bedeutet, dass Parameterinformation über die Parameteränderung bezüglich des zumindest einen Netzwerkelemets der Netzeinrichtungsebene vom zugehörigen NMC-Agenten des OMC der Netzeinrichtungsmanagementebene über das zumindest eine NMC als Manager der Netzmanagementebene an zumindest einen weiteren eines anderen OMC als Agenten der Netzeinrichtungsmanagementebene übermittelt wird. Eine Übertragung der Parmeterinformation lässt sich damit auf einfache Art und Weise automatisieren.

Die Übermittlung der Parameterinformation erfolgt bevorzugt ohne bzw. im wesentlichen ohne Zeitverzögerung. Die Schnittstelle zur zweiten Manager-Agent-Beziehung zwischen einem zweiten Manager (NMC) einer Netzmanagementebene und der Netzeinrichtung OMC als Agenten der Netzeinrichtungsmanagementebene kann mit Vorteil als Echtzeit-Schnittstelle ausgebildet sein. Auf diese Weise kann die Konsistenz von Parameterwerten zwischen Zellen in benachbarten Netzregionen mit Hilfe der Echtzeit-Schnittstelle (real-time OMC-NMC Management-Schnittstelle) sichergestellt werden.

Dabei kann zusätzlich vorgesehen sein, dass in dem für die Parameteränderung bezüglich des zumindest einen ersten Agenten der Netzeinrichtungsebene zugehörigen zweiten Agenten der Netzeinrichtungsmanagementebene und/oder in dem zumindest einen weiteren zweiten Agenten der Netzeinrichtungsmanagementebene Zuordnungsinformationen zu Zellen des Kommunikationssystems einerseits aus Sicht der zumindest einen ersten Manager-Agent-Beziehung zwischen einem ersten Manager einer Netzeinrichtungsmanagementebene und andererseits aus Sicht der zumindest eine zweite Manager-Agent-Beziehung zwischen einem zweiten Manager einer Netzmanagementebene und zumindest einem zweiten Agenten der Netzeinrichtungsmanagementebene vorgehalten oder verfügbar gehalten werden. Die Zuordnungsinformationen zu insbesondere benachbarten Zellen des Kommunikationssystems kann beispielsweise als Tabelle mit Zuordnungen *(mapping)* zwischen Zellenbezeichnungen an der OMC-NE-Schnittstelle und entsprechenden Zellenbezeichnungen im überregionalen Kontext an der OMC-NMC-Schnittstelle im OMC gespeichert oder von dort abrufbar gehalten werden.

Insbesondere können in jedem Agenten der Netzeinrichtungsmanagementebene, welcher genau einem zweiten Manager der Netzmanagementebene zugeordnet ist, Zuordnungsinformationen zu Zellen des Kommunikationssystems einerseits aus Sicht der zumindest einen ersten Manager-Agent-Beziehung zwischen einem ersten Manager einer Netzeinrichtungsmanagementebene und andererseits aus Sicht der zumindest einen zweiten Manager-Agent-Beziehung zwischen einem zweiten Manager einer Netzmanagementebene und zumindest einem zweiten Agenten der Netzeinrichtungsmanagementebene vorgehalten oder verfügbar gehalten werden. In diesem Fall wird erreicht, dass in den von mehreren Betriebs- und Wartungszentren (OMC) aufgespannten Regionen eines einzigen Netzwerkmanagementzentrums (NMC) alle Informationen vorhanden sind, die benötigt werden zur Umsetzung der Parameterinformation aus NMC-Sicht in OMC-Sicht und umgekehrt.

In Ausgestaltung der Erfindung wird die Parameterinformation über die Parameteränderung bezüglich des zumindest einen ersten Agenten der Netzeinrichtungsebene vom zugehörigen zweiten Agenten der Netzeinrichtungsmanagementebene über den zumindest einen zweiten Manager der Netzmanagementebene an zumindest einen weiteren zweiten Agenten der Netzeinrichtungsmanagementebene, bevorzugt an jeden weiteren zweiten Agenten der Netzeinrichtungsmanagementebene übermittelt, welchem als erstem Manager einer Netzeinrichtungsmanagementebene zumindest ein erster Agent der Netzeinrichtungsebene einer Nachbarzelle zur Zelle des ersten Agenten mit der Parameteränderung zugeordnet ist. Damit wird bewirkt, dass alle Betriebs- und Wartungszentren (OMC), denen eine Zelle benachbart zur Zelle der Parameteränderung zugeordnet ist, die Parameterinformation erhalten.

Die Parameterinformation kann über die Parameteränderung ausschließlich an einen oder mehrere weitere zweite Agenten der Netzeinrichtungsmanagementebene übermittelt werden, welchen als ersten Managern einer Netzeinrichtungsmanagementebene zumindest ein erster Agent der Netzeinrichtungsebene einer Nachbarzelle zur Zelle des ersten Agenten mit der Parameteränderung zugeordnet ist. Das bedeutet, dass ausschließlich die Nachbarzellen einer anderen Netzregion die Parameterinformation via Netzwerkmanagementzentrum (NMC) übermittelt bekommen.

Besonders vorteilhaft wirkt sich aus, wenn die Parameterinformation unter Berücksichtigung der Zuordnungsinformationen (beispielsweise als Tabelle mit Zuordnungen (*mapping*) zwischen Zellenbezeichnungen an der OMC-NE-Schnittstelle und entsprechenden Zellenbezeichnungen im überregionalen Kontext an der OMC-NMC-Schnittstelle im OMC) übermittelt wird.

Die Parameterinformation von jedem die Parmeterinformation empfangenden weiteren zweiten Agenten der Netzeinrichtungsmanagementebene kann an zumindest einen ersten Agenten der Netzeinrichtungsebene übermittelt werden. Dann liegen beispielsweise einer Netzeinrichtung (z.B. Netzkontrolleinrichtung BSC oder RNC), an welche die Parameterinformationen übermittelt werden, die Änderungen zu einer anderen Netzeinrichtung einer anderen Netzregion vor.

Mit Vorteil umfasst die Parameterinformation neben Information über den geänderten Parameter auch Zellinformation.

Das erfindungsgemäße Kommunikationssystem umfasst zumindest zwei Manager und zumindest zwei Agenten als Einrichtungen in verschiedenen Managementebenen, wobei zumindest eine erste Manager-Agent-Beziehung zwischen einem ersten Manager einer Netzeinrichtungsmanagementebene und zumindest einem ersten Agenten einer Netzeinrichtungsebene besteht und wobei zumindest eine zweite Manager-Agent-Beziehung zwischen einem zweiten Manager einer Netzmanagementebene und zumindest einem zweiten Agenten der Netzeinrichtungsmanagementebene besteht.

Es sind Mittel zur Übermittlung von Parameterinformation über die Änderung eines Parameters bezüglich des zumindest einen ersten Agenten der Netzeinrichtungsebene vom zugehörigen zweiten Agenten der Netzeinrichtungsmanagementebene über den zumindest einen zweiten Manager der Netzmanagementebene an zumindest einen weiteren zweiten Agenten der Netzeinrichtungsmanagementebene vorhanden. Das Kommunikationssystem kann insbesondere zur Durchführung der aufgezeigten Verfahren die-nen.

Das erfindungsgemäße Verfahren ist dabei grundsätzlich für alle Kommunikationsnetze und insbesondere Telekommunikationsnetze (insbesondere drahtlose, aber auch drahtgebundene) mit Netzeinrichtungszentren zugeordneten Netzregionen mit Zellen einsetzbar.

In der Regel liegen eine Vielzahl von Managern und eine Vielzahl von Agenten vor.

Das Verfahren ist grundsätzlich für alle Manager-Agent-Schnittstellen anwendbar. Es wird nachfolgend beispielhaft mit Ausführungen zu einer CMIP-basierten NMC-OMC-Schnittstelle erläutert. Das Verfahren ist jedoch bei Verwendung anderer Schnittstellen-Protokollen (z.B. SNMP oder CORBA) gleichermaßen einsetzbar.

Nachstehend wird die Erfindung anhand von Ausführungsbeispielen unter Bezugnahme auf Figuren näher erläutert.

Es zeigen:
- Fig. 1: das Blockschaltbild eines Netzplanungssystems für die Konfiguration eines Mobil-Kommunikationssystems mit Netzelementen und Betriebs- und Wartungszentren,
- Fig. 2: ein Blockschaltbild eines Managementnetzes für ein Kommunikationssystem mit Agent-Manager-Beziehung zwischen Netzeinrichtungen, Betriebs- und Wartungszentren und einem Netzwerkmanagementzentrum,
- Fig. 3: ein schematischer Ausschnitt eines Mobil-Kommunikationssystem für die NMC-Sicht,

- Fig. 4: ein schematischer Ausschnitt eines Mobil-Kommunikationssystem für die OMC-Sicht,
- Fig. 5: ein Beispiel eines Ablauf-Schemas einer erfindungsgemäßen Parameterinformationsübermittlung.

In Figur 1 ist das bereits oben erwähnte kundenspezifische Netzplanungs-System NPS dargestellt. Es dient beispielsweise dem Einbringen der Erstkonfiguration oder großer Konfigurationsänderungen über eine Datei-Schnittstelle *(file transfer)* zu einem OMC-spezifischen Netzplanungs-Tool NPT. Das Netzplanungs-Tool NPT führt die Anpassung der vom Netzplanungs-System gelieferten neuen Konfigurationsdaten gemäß den hersteller-spezifischen Parametern durch. Das jeweilige Betriebs- und Wartungszentrum OMC (OMC₁ ... OMCₙ) ist für die Konfigurierung aller Netzeinrichtungen *(Network Elements)* NE in seiner Netzregion zuständig.

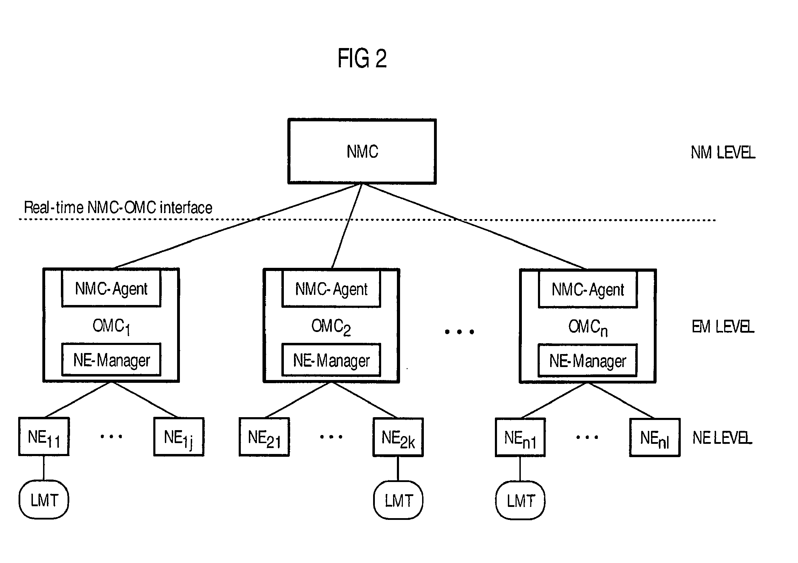

In Figur 2 ist das Blockschaltbild eines Managementnetzes für ein Mobil-Kommunikationssystem mit Agent-Manager-Beziehung zwischen einerseits Betriebs- und Wartungszentren OMC (Operation and Maintenance Center) und Netzeinrichtungen NE (Network Elements), sowie andererseits einem Netzwerkmanagementzentrum NMC (Network Management Center) und Betriebs- und Wartungszentren OMC (Operation and Maintenance Center) dargestellt. Figur 2 zeigt eine Darstellung mit drei Ebenen NM LEVEL, EM LEVEL und NE LEVEL.

Die Managementebene EM LEVEL kennzeichnet die Netzeinrichtungsmanagementebene ("Network Element Management Level"), in der Betriebs- und Wartungszentren OMC₁ , OMC₂ bis OMCₙ jeweils die herstellerspezifische Managementfunktionalität für beispielsweise nicht im Detail in Figur 2 gezeigte einzelne Basisstationen des Basisstationssystems bereitstellen. Die Managementebene NM LEVEL kennzeichnet die Netzwerkmanagementebene ("Network Management Level"), in der Netzwerkmanagementzentrum NMC eine integrierte, in der Regel vom Hersteller unabhängige Management-Funktionalität realisiert. Grundsätzlich können mehrere Netzwerkmanagementzentren NMC auf der Managementebene NM LEVEL vorhanden sein. Zwischen den Netzeinrichtungen unterschiedlicher Managementebenen sind definierte Schnittstellen zur Informationsübertragung vorgesehen.

Dargestellt sind unterhalb der Managementebene NE LEVEL des Managementnetzes, welche die Netzeinrichtungsebene ("Network Element Level") mit mehreren Basisstationssystemen enthält, auch einige lokale Wartungsgeräte LMT, die mit den Netzeinrichtungen NE₁₁, NE₂ₖ und NEₙ₁ verbunden sind.

Mit dem Netzwerkmanagementzentrum NMC sind über eine Echtzeit-Schnittstelle (NMC-OMC-Schnittstelle) , *Real-time NMC-OMC interface'* mit den Betriebs- und Wartungszentren OMC verbunden. Logisch ist das Netzwerkmanagementzentrum NMC mit den NMC-Agenten ,NMC-Agent' der Betriebs- und Wartungszentren OMC₁, OMC₂ bis OMCₙ (teilweise unten verkürzt benannt als OM-Cᵢ) verbunden. Jedes der Betriebs- und Wartungszentren OMC₁, OMC₂ bis OMCₙ weist außerdem logisch für die OMC-NE-Schnittstelle zu den Netzeinrichtungen NE₁₁ bis NE₁ⱼ, NE₂₁ bis NE₂ₖ und NEₙ₁ bis NEₙ₁ einen NE-Manager ,NE-Manager' auf.

Nachfolgend wird das erfindungsgemäße Verfahren anhand eines Mobilfunk-Netzes, das aus 3 Regionen besteht, beispielhaft erläutert.

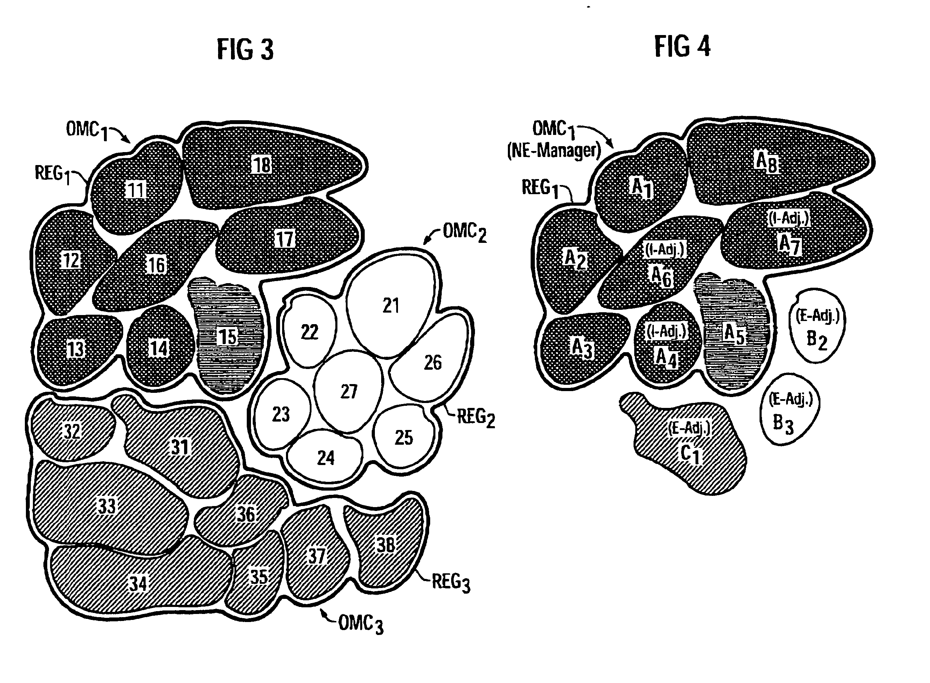

Figur 3 zeigt einen schematischen Ausschnitt eines Mobil-Kommunikationssystems für die NMC-Sicht.

Aus NMC-Sicht (an der NMC-OMC-Schnittstelle) besteht die gesamte Netzstruktur aus einer Menge von Zellen, die den jeweiligen Regionen zugeordnet sind:
- Eine erste Region REG₁ - überwacht vom OMC₁ - besteht aus den Zellen 11...18.
- Eine zweite Region REG₂ - überwacht vom OMC₂ - besteht aus den Zellen 21...27.
- Eine dritte Region REG₃ - überwacht vom OMC₃ - besteht aus den Zellen 31...38.

Das NMC kennt 2 Arten von Zellen, denen 2 verschiedene gemanagete Objektklassen (MOCs Managed Object Classes) entsprechen:
- *cell* (jede Zelle, die als Referenz-Zelle betrachtet wird)
- *adjacentCell* (jede Nachbarzelle einer Referenz-Zelle).

Das NMC hat für jede Referenz-Zelle eine Liste der dazugehörigen Nachbarzellen. Bei jedem Neustart der OMC-NMC-Schnittstelle erfolgt ein Abgleich *("Alignment")* der Konfigurationsdaten und im Normalbetrieb werden Konfigurationsänderungen (z.B. Erzeugung neuer Zellen) dem NMC mit Hilfe entsprechender Benachrichtigungen *(Notifications)* mitgeteilt, so dass diese Liste permanent aktuell ist.

Für das gezeigte Beispiel bedeutet dies:
- *cell* (Referenz-Zelle):Dies ist die Zelle 15 in der Region REG₁.
- *adjacentCells:* Zellen 14,16 und 17 in der Region REG₁.
   Zellen 22 und 23 in der Region REG₂.
   Zelle 31 in der Region REG₃.

Figur 4 zeigt im Vergleich zu Figur 3 einen schematischen Ausschnitt eines Mobil-Kommunikationssystems für die OMC-Sicht.

Für die OMC-Sicht (an der OMC-NE-Schnittstelle) wird hier exemplarisch die Region REG₁ untersucht.

Für das OMC₁ (als Manager der Netzelemente in der Region REG₁) besteht die "sichtbare" Netzstruktur aus 2 Teilen:
- Zellen innerhalb der eigenen Region REG₁ (Zellen A₁...A₈)
- Zellen außerhalb der eigenen Region REG₁ (Zellen B₂ - B₃ und C₁).

Das OMC₁ kennt 3 Arten von Zellen, denen folgende gemanagete Objektklassen (MOCs Managed Object Classes) entsprechen:
- *cell* (jede Zelle *der eigenen Region,* die als Referenz-Zelle betrachtet wird)
- *internalAdjacentCell* (jede Nachbarzelle einer Referenz-Zelle, die sich in der eigenen Region befindet)
- *externalAdjacentCell* (jede Nachbarzelle einer Referenz-Zelle, die sich in benachbarten Regionen befindet)

Für das gezeigte Beispiel bedeutet dies:
- *cell* (Referenz-Zelle):Zelle A₅ (entspricht der Zelle 15 aus NMC-Sicht)
- *internalAdjacentCells:* Zellen A₄ , A₆ , A₇ (entsprechen den Zellen 14, 16, 17 aus NMC-Sicht)
- *externalAdjacentCells:* Zellen B₂ , B₃ , C₁ (entsprechen den Zellen 22, 23, 31 aus NMC-Sicht)

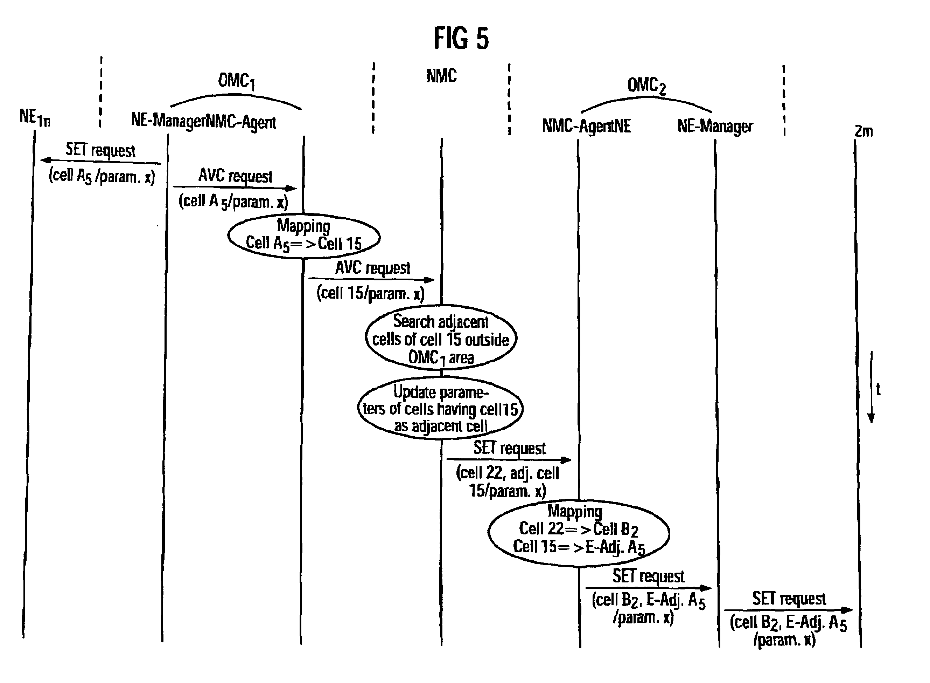

Figur 5 zeigt ein zugehöriges Beispiel eines Ablauf-Schemas einer erfindungsgemäßen Parameterinformationsübermittlung. Dabei verdeutlicht die Achse t die Zeit, d.h. die Reihenfolge des Ablaufes.

Die Sicherstellung der Konsistenz von Parameterwerten zwischen Zellen in benachbarten Netzregionen erfolgt beispielsweise folgendermaßen:
1. Es wird angenommen, ein Parameterwert in der Zelle A₅ wird lokal, vom OMC₁-Operator geändert. Ein standardisierter M-*SET* Befehl (gemäß ITU-T X.710 "Open Systems Interconnection - Common Management Information Service") wird an die entsprechende Netzeinrichtung NE übertragen ("cell A₅ /param. x").
2. Der NE-Manager des OMC₁ sendet an den NMC-Agent ein internes *attributeValueChange-Kommando* (AC command), mit Angabe der Zelle A₅ und des geänderten Parameterwertes ("cell A₅ /param. x").
3. Der NMC-Agent des OMC₁ verwaltet eine Tabelle mit Zuordnungen (*"Mapping"*) zwischen Zellenbezeichnungen an der OMC-NE-Schnittstelle und entsprechenden Zellenbezeichnungen im überregionalen Kontext (an der OMC-NMC-Schnittstelle). Der NMC-Agent des OMC₁ erkennt die Zuordnung der Zelle A₅ aus OMC-Sicht zu Zelle 15 ("Cell A₅ => Cell 15"). Der NMC-Agent des OMC₁ sendet daraufhin eine (ITU-T X.710) standardisierte *attributeValueChange-*Notification (AVC request) an das NMC, mit Angabe der Zelle 15 und des geänderten Parameterwertes ("cell 15 /param. x").
4. Das NMC prüft die Liste der Nachbarzellen für die Referenz-Zelle 15 (*"Search adjacent cells of cell 15 outside OMC₁ area").* Für jede der Nachbarzellen, die sich nicht in der gleichen Region wie die Referenz-Zelle (Region REG₁) befindet, aktualisiert das NMC die Parameterwerte in der eigenen Liste (*"Update parameters of cells having cell 15 as adjacent cell")* und sendet anschließend jeweils einen (ITU-T X.710) standardisierten *M-SET-Request* an das entsprechende OMC mit folgenden Angaben:
   - an OMC₂ (Region REG₂) jeweils für die Zelle 22 ("cell B2 E-Adj. A₅ /param. X") und Zelle 23 [letzteres ist in Figur 5 nicht dargestellt],
   - an OMC₃ (Region REG₃) für die Zelle 31 [in Figur 5 nicht dargestellt].

   Nachfolgend wird das weitere Verfahren am Beispiel für die Zelle 22 erläutert (für die Zellen 23 und 31 ist die Prozedur identisch).
5. Anhand der Zuordnungstabelle ("*Mapping*") erkennt der NMC-Agent im OMC₂, dass:
   - die Zelle B₂ aus dieser Netzregion der im *M-SET-Request* angegebenen Zelle 22 entspricht ("Cell 22 => Cell B₂"),
   - die "*external adjacent cell*" A₅ der im *M-SET-Request* angegebenen "*adjacent cell*" 15 entspricht("Cell 15 => E-Adj. A₅"').

   Anschließend sendet der NMC-Agent ein internes *SET-Kommando* ("cell B₂, E-Adj. A₅ /param. X") an den NE-Manager für die Zelle B₂. Das OMC₂ informiert anschließend mit einem (ITU-T X.710) standardisierten *M-SET-Request* ("cell B₂, E-Adj. A₅ /param. X") das aktuelle Netzelement NE₂ₘ über geänderte Parameterwerte in der Nachbarzelle der Region 1, d.h. die Datenkonsistenz ist sowohl in den OMCs als auch in deren überwachten NE automatisch sichergestellt.

Die Beschreibung des Verfahrensbeispiels erfolgte anhand einer Q3 (CMIP-basierten)-Schnittstelle. Die Erfindung ist aber auch auf andere Schnittstellen wie beispielsweise CORBAbasierte Schnittstellen anwendbar.

## Patentansprüche

1. Verfahren zur Behandlung von Parameteränderungen in einem Managementnetz zur Netzüberwachung und -kontrolle eines zellularen Kommunikationssystems,
wobei das Managementnetz zumindest zwei Manager (NMC; OM-Cᵢ) und zumindest zwei Agenten (OMCᵢ, NEᵢⱼ) als Einrichtungen in verschiedenen Managementebenen (NM LEVEL; EM LEVEL, NE LEVEL) umfasst,
wobei zumindest eine erste Manager-Agent-Beziehung zwischen einem ersten Manager (OMCᵢ) einer Netzeinrichtungsmanagementebene (EM LEVEL) und zumindest einem ersten Agenten (NEᵢⱼ) einer Netzeinrichtungsebene (NE LEVEL) besteht und
wobei zumindest eine zweite Manager-Agent-Beziehung zwischen einem zweiten Manager (NMC) einer Netzmanagementebene (NM LEVEL) und zumindest einem zweiten Agenten (OM-Cᵢ) der Netzeinrichtungsmanagementebene (EM LEVEL) besteht,
wobei ein Parameter bezüglich des zumindest einen ersten Agenten (NEᵢⱼ) der Netzeinrichtungsebene (NE LEVEL) geändert wird,
**dadurch gekennzeichnet,**
**dass** Parameterinformation über die Parameteränderung bezüglich des zumindest einen ersten Agenten (NEᵢⱼ, NE₁ₙ) der Netzeinrichtungsebene (NE LEVEL) vom zugehörigen zweiten Agenten (OMCᵢ; OMC₁) der Netzeinrichtungsmanagementebene (EM LEVEL) über den zumindest einen zweiten Manager (NMC) der Netzmanagementebene (NM LEVEL) an zumindest einen weiteren zweiten Agenten (OMCᵢ; OMC₂) der Netzeinrichtungsmanagementebene (EM LEVEL) übermittelt wird.

2. Verfahren nach Anspruch 1,
**dadurch gekennzeichnet,**
**dass** in dem für die Parameteränderung bezüglich des zumindest einen ersten Agenten (NEᵢⱼ, NE₁ₙ) der Netzeinrichtungsebene (NE LEVEL) zugehörigen zweiten Agenten (OMCᵢ; OMC₁) der Netzeinrichtungsmanagementebene (EM LEVEL) und/oder in dem zumindest einen weiteren zweiten Agenten (OMCᵢ; OMC₂) der Netzeinrichtungsmanagementebene (EM LEVEL) Zuordnungsinformationen zu Zellen (11, ..., 18, 21, ..., 27, 31, ..., 38; A₁, ..., A₈, B₂, B₃, C₁) des Kommunikationssystems einerseits aus Sicht der zumindest einen ersten Manager-Agent-Beziehung zwischen einem ersten Manager (OMCᵢ) einer Netzeinrichtungsmanagementebene (EM LEVEL) und andererseits aus Sicht der zumindest eine zweite Manager-Agent-Beziehung zwischen einem zweiten Manager (NMC) einer Netzmanagementebene (NM LEVEL) und zumindest einem zweiten Agenten (OMCᵢ) der Netzeinrichtungsmanagementebene (EM LEVEL) vorgehalten oder verfügbar gehalten werden.

3. Verfahren nach Anspruch 2,
**dadurch gekennzeichnet,**
**dass** in jedem Agenten (OMCᵢ; OMC₂) der Netzeinrichtungsmanagementebene (EM LEVEL), welcher genau einem zweiten Manager (NMC) der Netzmanagementebene (NM LEVEL) zugeordnet ist, Zuordnungsinformationen zu Zellen (11, ..., 18, 21, ..., 27, 31, ..., 38; A₁, ..., A₈, B₂, B₃, C₁) des Kommunikationssystems einerseits aus Sicht der zumindest einen ersten Manager-Agent-Beziehung zwischen einem ersten Manager (OMCᵢ) einer Netzeinrichtungsmanagementebene (EM LEVEL) und andererseits aus Sicht der zumindest einen zweiten Manager-Agent-Beziehung zwischen einem zweiten Manager (NMC) einer Netzmanagementebene (NM LEVEL) und zumindest einem zweiten Agenten (OMCᵢ) der Netzeinrichtungsmanagementebene (EM LEVEL) vorgehalten oder verfügbar gehalten werden.

4. Verfahren nach einem der Ansprüche 1 bis 3,
**dadurch gekennzeichnet,**
**dass** die Parameterinformation über die Parameteränderung bezüglich des zumindest einen ersten Agenten (NEᵢⱼ, NE₁ₙ) der Netzeinrichtungsebene (NE LEVEL) vom zugehörigen zweiten Agenten (OMCᵢ; OMC₁) der Netzeinrichtungsmanagementebene (EM LEVEL) über den zumindest einen zweiten Manager (NMC) der Netzmanagementebene (NM LEVEL) an zumindest einen weiteren zweiten Agenten (OMCᵢ; OMC₂) der Netzeinrichtungsmanagementebene (EM LEVEL), bevorzugt an jeden weiteren zweiten Agenten (OMCᵢ; OMC₂) der Netzeinrichtungsmanagementebene (EM LEVEL) übermittelt wird, welchem als erstem Manager (OMCᵢ, OMC₂) einer Netzeinrichtungsmanagementebene (EM LEVEL) zumindest ein erster Agent (NEᵢⱼ, NE₂ₘ) der Netzeinrichtungsebene (NE LEVEL) einer Nachbarzelle zur Zelle des ersten Agenten (NEᵢⱼ, NE₁ₙ) mit der Parameteränderung zugeordnet ist.

5. Verfahren nach Anspruch 4,
**dadurch gekennzeichnet,**
**dass** die Parameterinformation über die Parameteränderung ausschließlich an einen oder mehrere weitere zweite Agenten (OMCᵢ; OMC₂) der Netzeinrichtungsmanagementebene (EM LEVEL) übermittelt wird, welchen als ersten Managern (OM-Cᵢ, OMC₂) einer Netzeinrichtungsmanagementebene (EM LEVEL) zumindest ein erster Agent (NEᵢⱼ, NE₂ₘ) der Netzeinrichtungsebene (NE LEVEL) einer Nachbarzelle zur Zelle des ersten Agenten (NEᵢⱼ, NE₁ₙ) mit der Parameteränderung zugeordnet ist.

6. Verfahren nach Anspruch 4 oder 5,
**dadurch gekennzeichnet,**
**dass** die Parameterinformation unter Berücksichtigung der Zuordnungsinformationen übermittelt wird.

7. Verfahren nach einem der Ansprüche 1 bis 6,
**dadurch gekennzeichnet,**
**dass** die Parameterinformation von jedem die Parameterinformation empfangenden weiteren zweiten Agenten (OMCᵢ; OMC₂) der Netzeinrichtungsmanagementebene (EM LEVEL) an zumindest einen ersten Agenten (NEᵢⱼ, NE₂ₘ) der Netzeinrichtungsebene (NE LEVEL) übermittelt wird.

8. Verfahren nach einem der Ansprüche 1 bis 7,
**dadurch gekennzeichnet,**
**dass** die Parameterinformation neben Information über den geänderten Parameter Zellinformation umfasst.

9. Kommunikationssystem mit einem Managementnetz zur Netzüberwachung und -kontrolle des zellularen Kommunikationssystems
umfassend zumindest zwei Manager (NMC; OMCᵢ) und zumindest zwei Agenten (OMCᵢ, NEᵢⱼ) als Einrichtungen in verschiedenen Managementebenen (NM LEVEL; EM LEVEL, NE LEVEL)
wobei zumindest eine erste Manager-Agent-Beziehung zwischen einem ersten Manager (OMCᵢ) einer Netzeinrichtungsmanagementebene (EM LEVEL) und zumindest einem ersten Agenten (NEᵢⱼ) einer Netzeinrichtungsebene (NE LEVEL) besteht und
wobei zumindest eine zweite Manager-Agent-Beziehung zwischen einem zweiten Manager (NMC) einer Netzmanagementebene (NM LEVEL) und zumindest einem zweiten Agenten (OM-Cᵢ) der Netzeinrichtungsmanagementebene (EM LEVEL) besteht,
insbesondere zur Durchführung des Verfahrens nach einem der vorangehenden Ansprüche 1 bis 8,
**dadurch gekennzeichnet,**
**dass** Mittel zur Übermittlung von Parameterinformation über die Änderung eines Parameters bezüglich des zumindest einen ersten Agenten (NEᵢⱼ) der Netzeinrichtungsebene (NE LEVEL) vom zugehörigen zweiten Agenten (OMCᵢ; OMC₁) der Netzeinrichtungsmanagementebene (EM LEVEL) über den zumindest einen zweiten Manager (NMC) der Netzmanagementebene (NM LEVEL) an zumindest einen weiteren zweiten Agenten (OMCᵢ; OMC₂) der Netzeinrichtungsmanagementebene (EM LEVEL) vorhanden sind.

10. Kommunikationssystem nach Anspruch 9,
**dadurch gekennzeichnet,**
**dass** die Schnittstelle zur zweiten Manager-Agent-Beziehung zwischen einem zweiten Manager (NMC) einer Netzmanagementebene (NM LEVEL) und dem Netzeinrichtungszentrum (OMCᵢ) als zweitem Agenten (OMCᵢ) der Netzeinrichtungsmanagementebene (EM LEVEL) als Echtzeit-Schnittstelle ausgebildet ist.

## Claims

1. A method for handling parameter changes in a management network for the purposes of network monitoring and network control of a cellular communication system,
wherein the management network comprises at least two managers (NMC; OMCᵢ) and at least two agents (OMCᵢ, NEᵢⱼ) as elements within different management levels (NM LEVEL; EM LEVEL, NE LEVEL),
wherein at least one first manager-agent relation exists between a first manager (OMCᵢ) of a network element management level (EM LEVEL) and at least one first agent (NEᵢⱼ) of a network element level (NE LEVEL), and
wherein at least one second manager-agent relation exists between a second manager (NMC) of a network management level (NM LEVEL) and at least one second agent (OM-Cᵢ) of the network element management level (EM LEVEL),
wherein a parameter referring to said at least one first agent (NEᵢⱼ) of the network element level (NE LEVEL) is changed,
**characterised in that**
parameter information about the parameter change referring to said at least one first agent (NEᵢⱼ, NE₁ₙ) of the network element level (NE LEVEL) is transferred by the associated second agent (OMCᵢ; OMC₁) of the network element management level (EM LEVEL) via said at least one second manager (NMC) of the network management level (NM LEVEL) to at least one further second agent (OMCᵢ; OMC₂) of the network element management level (EM LEVEL).

2. The method according to claim 1,
**characterised in that**
within the associated second agent (OMCᵢ; OMC₁) of the network element management level (EM LEVEL) for the parameter change referring to said at least one first agent (NEᵢⱼ, NE₁ₙ) of the network element level (NE LEVEL) and/or within said at least one further second agent (OMCᵢ; OMC₂) of the network element management level (EM LEVEL), assignment information relating to cells (11, ..., 18, 21, ..., 27, 31, ..., 38; Aᵢ, ..., A₈, B₂, B₃, Cᵢ) of the communication system is kept or kept available on the one hand from the viewpoint of said at least one first manager-agent relation between a first manager (OMCᵢ) of a network element management level (EM LEVEL) and on the other hand from the viewpoint of said at least one second manager-agent relation between a second manager (NMC) of a network management level (NM LEVEL) and at least one second agent (OMCᵢ) of the network element management level (EM LEVEL).

3. The method according to claim 2,
**characterised in that**
within each agent (OMCᵢ; OMC₂) of the network element management level (EM LEVEL), which is assigned to precisely one second manager (NMC) of the network management level (NM LEVEL), assignment information relating to cells (11, ..., 18, 21, ..., 27, 31, ..., 38; Aᵢ, ... , A₈, B₂, B₃, Cᵢ) of the communication system is kept or kept available on the one hand from the viewpoint of said at least one first manager-agent relation between a first manager (OMCᵢ) of a network element management level (EM LEVEL) and on the other hand from the viewpoint of said at least one second manager-agent relation between a second manager (NMC) of a network management level (NM LEVEL) and at least one second agent (OMCᵢ) of the network element management level (EM LEVEL).

4. The method according to one of claims 1 to 3,
**characterised in that**
the parameter information about the parameter change referring to said at least one first agent (NEᵢⱼ, NE₁ₙ) of the network element level (NE LEVEL) is transferred by the associated second agent (OMCᵢ; OMC₁) of the network element management level (EM LEVEL) via said at least one second manager (NMC) of the network management level (NM LEVEL) to at least one further second agent (OMCᵢ; OMC₂) of the network element management level (EM LEVEL), and preferably to each further second agent (OMCᵢ; OMC₂) of the network element management level (EM LEVEL) to which, as first manager (OMCᵢ, OMC₂) of a network element management level (EM LEVEL), at least one first agent (NEᵢⱼ, NE₂ₘ) of the network element level (NE LEVEL) of a neighbouring cell to the cell of the first agent (NEᵢⱼ, NE₁ₙ) with the parameter change is assigned.

5. The method according to claim 4,
**characterised in that**
the parameter information about the parameter change is transferred exclusively to one or more further second agents (OMCᵢ; OMC₂) of the network element management level (EM LEVEL) to which, as first managers (OM-Cᵢ, OMC₂) of a network element management level (EM LEVEL), at least one first agent (NEᵢⱼ, NE₂ₘ) of the network element level (NE LEVEL) of a neighbouring cell to the cell of the first agent (NEᵢⱼ, NE₁ₙ) with the parameter change is assigned.

6. The method according to claim 4 or 5,
**characterised in that**
the parameter information is transferred while taking account of the assignment information.

7. The method according to one of claims 1 to 6,
**characterised in that**
the parameter information is transferred by each further second agent (OMCᵢ; OMC₂) of the network element management level (EM LEVEL) receiving the parameter information to at least one first agent (NEᵢⱼ, NE₂ₘ) of the network element level (NE LEVEL).

8. The method according to one of claims 1 to 7,
**characterised in that**
the parameter information comprises cell information as well as information about the changed parameter.

9. A communication system with a management network for the purposes of network monitoring and network control of the cellular communication system,
comprising at least two managers (NMC; OMCᵢ) and at least two agents (OMCᵢ, NEᵢⱼ) as elements within different management levels (NM LEVEL; EM LEVEL, NE LEVEL)
wherein at least one first manager-agent relation exists between a first manager (OMCᵢ) of a network element management level (EM LEVEL) and at least one first agent (NEᵢⱼ) of a network element level (NE LEVEL), and
wherein at least one second manager-agent relation exists between a second manager (NMC) of a network management level (NM LEVEL) and at least one second agent (OM-Cᵢ) of the network element management level (EM LEVEL),
particularly for implementing the method as claimed in one of the preceding claims 1 to 8,
**characterised in that**
means are present for the transfer of parameter information about the change in a parameter referring to said at least one first agent (NEᵢⱼ) of the network element level (NE LEVEL) by the associated second agent (OMCᵢ; OMC₁) of the network element management level (EM LEVEL) via said at least one second manager (NMC) of the network management level (NM LEVEL) to at least one further second agent (OMCᵢ; OMC₂) of the network element management level (EM LEVEL).

10. The communication system according to claim 9,
**characterised in that**
the interface to the second manager-agent relation between a second manager (NMC) of a network management level (NM LEVEL) and the network element centre (OMCᵢ) as second agent (OMCᵢ) of the network element management level (EM LEVEL) is realized as a real-time interface.

## Revendications

1. Procédé pour le traitement de modifications de paramètres dans un réseau de management pour la surveillance et le contrôle de réseau d'un système de communication cellulaire,
le réseau de management comprenant au moins deux managers (NMC ; OMCᵢ) et au moins deux agents (OMCᵢ, NEᵢⱼ) comme éléments dans différents niveaux de management (NM LEVEL ; EM LEVEL, NE LEVEL),
au moins une première relation manager-agent existant entre un premier manager (OMCᵢ) d'un niveau de management d'élément de réseau (EM LEVEL) et au moins un premier agent (NEᵢⱼ) d'un niveau d'élément de réseau (NE LEVEL) et
au moins une seconde relation manager-agent existant entre un second manager (NMC) d'un niveau de management de réseau (NM LEVEL) et au moins un second agent (OMCᵢ) du niveau de management d'élément de réseau (EM LEVEL),
un paramètre concernant le au moins un premier agent (NEᵢⱼ) du niveau d'élément de réseau (NE LEVEL) étant modifié,
**caractérisé en ce que**
de l'information de paramètre sur la modification des paramètres concernant le au moins un premier agent (NEᵢⱼ, NE₁ₙ) du niveau d'élément de réseau (NE LEVEL) étant transmise par le second agent (OMCᵢ; OMC₁) correspondant du niveau de management d'élément de réseau (EM LEVEL) par le au moins un second manager (NMC) du niveau de management de réseau (NM LEVEL) à au moins un autre second agent (OMCᵢ, OMC₂) du niveau de management d'élément de réseau (EM LEVEL).

2. Procédé selon la revendication 1,
**caractérisé en ce que**,
dans le second agent (OMCᵢ, OMC₁), spécifique de la modification de paramètres concernant le au moins un premier agent (NEᵢⱼ, NE₁ₙ) du niveau d'élément de réseau (NE LEVEL), du niveau de management d'élément de réseau (EM LEVEL) et/ou dans le au moins un autre second agent (OMCᵢ, OMC₂) du niveau de management d'élément de réseau (EM LEVEL), des informations d'attribution aux cellules (11, ..., 18, 21, ..., 27, 31, ..., 38 ; A₁, ..., A₈, B₂, B₃, C₁) du système de communication sont
présentées ou tenues à disposition d'une part du point de vue de la au moins une première relation manager-agent entre un premier manager (OMCᵢ) d'un niveau de management d'élément de réseau (EM LEVEL) et d'autre part du point de vue de la au moins une seconde relation manager-agent entre un second manager (NMC) d'un niveau de management de réseau (NM LEVEL) et au moins un second agent (OMCᵢ) du niveau de management d'élément de réseau (EM LEVEL).

3. Procédé selon la revendication 2,
**caractérisé en ce que**,
dans chaque agent (OMCᵢ; OMC₂) du niveau de management d'élément de réseau (EM LEVEL), qui est attribué exactement à un second manager (NMC) du niveau de management de réseau (NM LEVEL), des informations d'attribution à des cellules (11, ..., 18, 21, ..., 27, 31, ..., 38 ; A₁, ..., A₈, B₂, B₃, C₁) du système de communication sont présentées ou tenues à disposition d'une part du point de vue de la au moins une première relation manager-agent entre un premier manager (OMCᵢ) d'un niveau de management d'élément de réseau (EM LEVEL) et d'autre part du point de vue de la au moins une seconde relation manager-agent entre un second manager (NMC) d'un niveau de management de réseau (NM LEVEL) et au moins un second agent (OMCᵢ) du niveau de management d'élément de réseau (EM LEVEL).

4. Procédé selon l'une quelconque des revendications 1 à 3,
**caractérisé en ce que**
l'information de paramètre sur la modification de paramètre concernant le au moins un premier agent (NEᵢⱼ, NE₁ₙ) du niveau d'élément de réseau (NE LEVEL) est transmise par le second agent (OMCᵢ; OMC₁) du niveau de management d'élément de réseau (EM LEVEL) par le au moins un second manager (NMC) du niveau de management de réseau (NM LEVEL) à au moins un autre second agent (OMCᵢ, OMC₂) du niveau de management d'élément de réseau (EM LEVEL), de préférence à tout autre second agent (OMCᵢ; OMC₂) du niveau de management d'élément de réseau (EM LEVEL), auquel est attribué, en tant que premier manager (OMCᵢ, OMC₂) d'un niveau de management d'éléments de réseau (EM LEVEL), au moins un premier agent (NEᵢⱼ, NE₂ₘ) du niveau d'élément de réseau (NE LEVEL) d'une cellule voisine de la cellule du premier agent (NEᵢⱼ, NE₁ₙ) avec la modification de paramètre.

5. Procédé selon la revendication 4,
**caractérisé en ce que**,
l'information de paramètre concernant la modification de paramètre est transmise exclusivement à un ou plusieurs autres seconds agents (OMCᵢ, OMC₂) du niveau de management d'élément de réseau (EM LEVEL), auxquels est attribué, en tant que premiers managers (OMCᵢ, OMC₂) d'un niveau de management d'élément de réseau (EM LEVEL), au moins un premier agent (NEᵢⱼ, NE₂ₘ) du niveau d'élément de réseau (NE LEVEL) d'une cellule voisine de la cellule du premier agent (NEᵢⱼ, NE₁ₙ) avec la modification de paramètre.

6. Procédé selon la revendication 4 ou 5,
**caractérisé en ce que**,
l'information de paramètre est transmise en tenant compte des informations d'attribution.

7. Procédé selon l'une quelconque des revendications 1 à 6,
**caractérisé en ce que**,
l'information de paramètre est transmise par tout autre second agent (OMCᵢ, OMC₂), recevant l'information de paramètre, du niveau de management d'élément de réseau (EM LEVEL) à au moins un premier agent (NEᵢⱼ, NE₂ₘ) du niveau d'élément de réseau (NE LEVEL).

8. Procédé selon l'une quelconque des revendications 1 à 7,
**caractérisé en ce que**,
l'information de paramètre comprend l'information sur la cellule en plus de l'information sur le paramètre modifié.

9. Système de communication avec un réseau de management pour la surveillance et le contrôle du réseau du système de communication cellulaire
comprenant au moins deux managers (NMC ; OMCᵢ) et au moins deux agents (OMCᵢ, NEᵢⱼ) comme éléments dans différents niveaux de management (NM LEVEL ; EM LEVEL, NE LEVEL),
au moins une première relation manager-agent existant entre un premier manager (OMCᵢ) d'un niveau de management d'élément de réseau (EM LEVEL) et au moins un premier agent (NEᵢⱼ) d'un plan d'élément de réseau (NE LEVEL) et
au moins une seconde relation manager-agent existant entre un second manager (NMC) d'un niveau de management de réseau (NM LEVEL) et au moins un second agent (OM-Cᵢ) du niveau de management d'élément de réseau (EM LEVEL),
en particulier pour la mise en oeuvre du procédé selon l'une quelconque des revendications précédentes 1 à 8,
**caractérisé en ce que**,
des moyens pour la transmission d'information de paramètre sur la modification d'un paramètre concernant le au moins un premier agent (NEᵢⱼ) du niveau d'élément de réseau (NE LEVEL) du second agent spécifique (OMCᵢ, OMC₁) du niveau de management d'élément de réseau (EM LEVEL) par le au moins un second manager (NMC) du niveau de management de réseau (NM LEVEL) à au moins un autre second agent (OMCᵢ; OMC₂) du niveau de management d'élément de réseau (EM LEVEL) sont présents.

10. Système de communication selon la revendication 9,
**caractérisé en ce que**,
l'interface avec la double relation manager-agent entre un second manager (NMC) d'un niveau de management de réseau (NM LEVEL) et le centre d'élément de réseau (OMCᵢ) comme second agent (OMCᵢ) de l'élément de réseau (EM LEVEL) est conçue comme interface en temps réel.
